**Europäisches Patentamt**

**European Patent Office**

**Office européen des brevets**

(19)

(11) Veröffentlichungsnummer: **0 239 670 B1**

# EUROPÄISCHE PATENTSCHRIFT

(12)

(45) Veröffentlichungstag der Patentschrift:
30.01.91 Patentblatt 91/05

(51) Int. Cl.$^5$: **B25B 23/14, B25B 23/147**

(21) Anmeldenummer: **86116342.6**

(22) Anmeldetag: **25.11.86**

(54) **Motorgetriebene Maschine mit Drehmomenteinstellung, insbesondere elektrisches Handwerkzeug.**

(30) Priorität: **01.04.86 DE 3610820**

(43) Veröffentlichungstag der Anmeldung:
**07.10.87 Patentblatt 87/41**

(45) Bekanntmachung des Hinweises auf die
Patenterteilung:
**30.01.91 Patentblatt 91/05**

(84) Benannte Vertragsstaaten:
**CH DE FR GB IT LI NL SE**

(56) Entgegenhaltungen:
**EP-A- 0 182 986**
**CH-A- 559 603**
**DE-A- 2 149 017**
**DE-A- 2 156 012**
**DE-A- 2 410 114**
**DE-A- 2 726 818**
**DE-A- 2 731 090**

(56) Entgegenhaltungen:
**DE-A- 3 526 150**
**FR-A- 319 457**
**FR-A- 689 073**
**FR-A- 2 316 049**
**US-A- 1 564 667**
**US-A- 2 452 178**
**US-A- 3 645 341**
**IBM TECHNICAL DISCLOSURE BULLETIN,**
**Band 27, Nr. 10A, März 1985, Seiten 5620-5621**
**New York, US; "Torque-Limited Screwdriver"**

(73) Patentinhaber: **C. & E. FEIN GmbH & Co.**
**Leuschnerstrasse 41-47**
**D-7000 Stuttgart 1 (DE)**

(72) Erfinder: **Die Erfinder haben auf ihre Nennung verzichtet**

(74) Vertreter: **Haecker, Walter**
**Patentanwaltskanzlei Hoeger, Stellrecht &**
**Partner Uhlandstrasse 14c**
**D-7000 Stuttgart 1 (DE)**

EP 0 239 670 B1

**Beschreibung**

Die Erfindung betrifft eine motorgetriebene Maschine mit variabler Drehmomenteinstellung, insbesondere elektrisches Handwerkzeug, mit einem Motor, einer Arbeitsspindel und einem zwischen diesen vorgesehenen, mindestens ein zwischengeschaltetes Räderpaar aufweisendes Getriebe, welches ein Maschinengehäuse sowie eine in zwei im Abstand voneinander angeordneten Lagern aufgenommene Getriebewelle umfaßt, wobei die Getriebewelle durch das erste, radial zu ihrer Längsachse gegen eine Gegenkraft verschiebbare Lager von einer Ausgangsstellung in eine ein Sensorelement einer Drehmomentabschaltung betätigende Abschaltstellung bewegbar ist.

Es wurde auch bereits vorgeschlagen, auf der oder einer der Getriebewellen Dehnungsmeßstreifen anzubringen, mit denen man die durch das Gegendrehmoment hervorgerufene Verdrehung der Welle mißt. Das Anbringen von Dehnungsmeßstreifen ist aber allenfalls zu Versuchszwecken, nicht jedoch bei einer Serienproduktion praktikabel.

Aus der DE-A-27 31 090 ist ein Drehmomentschrauber bekannt, bei welchem eine Drehmomentabschaltung einstellbar ist. Dieser Drehmomentschrauber umfaßt einen Motor, eine Arbeitsspindel und ein zwischen diesen vorgesehenes Getriebe mit mindestens einem zwischengeschalteten Räderpaar, welches ein Maschinengehäuse sowie eine in zwei im Abstand voneinander angeordneten Lagern aufgenommene Getriebewelle umfaßt. Die Getriebewelle ist bei diesem

Drehmomentschrauber ihrerseits in einem Schwenkträger gelagert und somit als Ganzes in paralleler Ausrichtung zur Arbeitsspindel um deren Achse herum schwenkbar. Diese Schwenkbewegung wird von einem Zahnrad abgenommen und über eine Welle mit einem Hebel auf eine Druckmeßdose übertragen, die bei entsprechend hohem Druck über ein Steuergerät eine Kupplung betätigt, welche den Antrieb von dem Getriebe abkoppelt.

Diese Maschine hat den Nachteil, daß sie durch die zwischen Antrieb und Getrieb einzubauende Kupplung in Längsrichtung der Arbeitsspindel sehr groß baut, was insbesondere bei einem elektrischen Handwerkzeug problematisch ist, da es nicht kompakt genug ausgeführt sein kann. Ferner hat die drehbare Lagerung der Zwischenwelle den Nachteil, daß sie sehr aufwendig ist, da sie so ausgeführt sein muß, daß sie sämtliche auf die Zwischenwelle wirkenden Drehmomente aufnimmt. Außerdem ist für eine Schwenkbewegung der Zwischenwelle ein großer Raum notwendig. Schließlich hat auch noch die Abnahme der Schwenkbewegung über ein Zahnrad den Nachteil, daß ebenfalls wiederum sehr viel Raum für die Übertragung auf die als Sensorelement dienende Druckmeßdose benötigt wird. Damit ist der Aufbau der Maschine mit Drehmomentabschaltung gemäß der DE-A-27 31 090 wegen seiner Großvolumigkeit und aufwendigen Bauweise, insbesondere für elektrische Handwerkzeuge, nicht geeignet.

Aus der nicht veröffentlichten EP-A-O 182 986 ist eine motorgetriebene Schraubvorrichtung bekannt, bei welcher die Getriebewelle lediglich eine Kippbewegung durchführt und im Rahmen dieser Kippbewegung einen Schalter zum Abschalten des Motors betätigt, wobei diese Kippbewegung gegen eine Gegenkraft erfolgt. Die Getriebewelle führt hierzu eine geradegerichtete Ausweichbewegung aus.

Ausgehend von dem nächstliegenden, vorveröffentlichten Stand der Technik, der DE-A-27 31 090, liegt der Erfindung die Aufgabe zugrunde, eine motorgetriebene Maschine mit Drehmomenteinstellung der eingangs beschriebenen Art so weiterzubilden, daß mit verhältnismäßig geringem Aufwand und möglichst ohne Vergrößerung der Maschine eine Drehmomentabschaltung bei Erreichen des Sollwerts sicher bewirkt werden kann.

Diese Aufgabe wird bei einer Maschine der eingangs beschriebenen Art erfindungsgemäß dadurch gelöst, daß das erste Lager bogenförmig um eine zwischen der Arbeitsspindel und der Getriebewelle liegende geometrische Achse begrenzt bewegbar gelagert ist, daß das zweite Lager radial zur Längsachse der Getriebewelle unbeweglich in dem Maschinengehäuse verankert ist, so daß die Getriebewelle in ihrer Abschaltstellung gegenüber der Ausgangsstellung um das zweite Lager verkippt ist, und daß das Sensorelement ein im Bewegungsbereich des ersten Lagers oder eines mit diesem fest verbundenen Maschinenteils angeordnetes Schaltelement ist, welches bei der Verkippbewegung der Getriebewelle die Motorabschaltung auslöst.

Weitere vorteilhafte Merkmale sind Gegenstand der Unteransprüche 2 bis 4.

Darüberhinaus wird die erfindungsgemäße Aufgabe bei einer motorgetriebenen Maschine der eingangs beschriebenen Art erfindungsgemäß dadurch gelöst, daß die Getriebewelle eine Vorgelegewelle mit mindestens zwei Ritzeln unterschiedlicher Größe ist und die Arbeitsspindel zwei lose drehbare Schiebe-Zahnräder unterschiedlicher Größe trägt, wobei in der einen Schiebeendstellung das eine und in der anderen

Schiebeendstellung das andere mit der Arbeitsspindel gekuppelt ist, während sie in einer etwa mittleren Leerlaufschiebestellung von der Arbeitsspindel abgekuppelt sind, daß beide Schiebe-Zahnräder in jeder Schiebestellung mit ihren Ritzeln im Eingriff stehen, daß das zweite Lager radial zur Längsachse der Getriebewelle unbeweglich in dem Maschinengehäuse verankert ist, so daß die Getriebewelle in ihrer Abschaltstellung gegenüber der Ausgangsstellung um das zweite Lager verkippt ist, und daß das Sensorelement ein im Bewegungsbereich des ersten Lagers oder eines mit diesem fest verbundenen Maschinenteil angeordnetes Schaltelement ist, welches bei der Verkippbewegung der Getriebewelle die Motorabschaltung auslöst.

Weitere vorteilhafte Ausgestaltungen sind Gegenstand der Unteransprüche 6 bis 12.

Das quer bewegbare Lager der Getriebewelle wird von der Gegenkraft in einer Ausgangs- oder Nullstellung gehalten. Solange das daran angreifende Gegendrehmoment unter einem dieser Gegenkraft entsprechenden Wert bliet, verharrt die Getriebewelle hinsichtlich des seitlichen Ausweichens ihres bewegbaren Lagers in dieser Ausgangsstellung. Steigt jedoch das Gegendrehmoment unzulässig an, so entsteht am bewegbaren Lager eine entgegen der Gegenkraft gorichtete Kraft, welche den Wert der Gegenkraft übertrifft und infolgedessen ein seitliches Ausweichen des Getriebewellenlagers ermöglicht Weil sich im Bewegungsbereich dieses Lagers oder auch eines damit fest verbundenen starren Maschinenteils ein Schaltelement für den Antriebsmotor befindet, bewirkt diese Querbewegung des Getriebewellenlagers zugleich auch einen Schaltvorgang im Sinne einer Motorabschaltung. Hierbei ist es gleichwertig, ob das Lager bei seiner Auslenkbewegung ein Schaltelement freigibt, welches in der Normalstellung betätigt ist, oder ob die Ausweichbewegung zu einem Betätigen eines Schaltelements führt. Wichtig ist nur, daß der Schaltvorgang die Energiezufuhr zum Antriebsmotor unterbricht. Das Merkmal, gemäß dem sich im Bewegungsbereich des bewegbaren Lagers der Getriebewelle ein Schaltelement für den Antriebsmotor befindet, ist also in weitestem Sinne zu verstehen, d.h. dieses Lager kann mit dem Schaltelement sowohl bei seiner Hin-als auch seiner Rückbewegung im Sinne eines Schaltsvorganges zusammenwirken.

Selbstverständlich ist die Getriebewelle beidendig gelagert, jedoch kann nur eines der beiden Lager die beschriebene Querbewegung ausführen, Es leuchtet auch ohne weiteres ein, daß bereits eine kleine Querbewegung für einen Schaltvorgang ausreicht. Insofem nimmt also die Getriebewelle bei abgeschaltetem Motor nur eine unmerklich Schrägstellung ein. Dies ist im Hinblick auf die in Eingriff befindlichen Zahnräder u. dgl. ohne jeglichen Nachteil. Auch das feste Lager am anderen Ende der Getriebewelle kann über das allgemein übliche Spiel die auch dort auftretende minimale Schrägstellung ohne weiteres verkraften. Hierbei darf nicht übersehen werden, daß die Welle mit der Schrägstellung zugleich zum Stillstand kommt und sich deshalb die Schrägstellung des Wellenendes im nicht querbeweglichen anderen Getriebewellenlager aufgrund dieser kurzen Zeitspanne nicht nachteilig auswirken kann.

Auf der anderen Seite muß das bewegbare Lager nicht größer ausgebildet werden als ein herkömmliches Lager einer in Querrichtung nicht oder nur im Rahmen des Spieles bewegbaren Getriebewelle, so daß diesbezüglich kein erhöhter Platzbedarf besteht, Das Schaltelement für die Abschaltung des Antriebsmotors kann von minimaler Größe sein und dies gilt auch für eine dieses Schaltelement aufweisende Schaltvorrichtung, die diese motorgetriebene Maschine die an sie gestellten Forderungen optimal.

Eine besonders bevorzugte Ausführungsform in Form einer Maschine mit variabler Drehmomenteinstellung kennzeichnet sich dadurch, daß die Stärke der Gegenkraft einstellbar ist. Damit kann man bei dieser Maschine mehrere, im Falle einer stufenlosen Verstellung der Stärke der Gegenkraft eine Vielzahl von Drehmomenteinstellungen vornehmen. Die Art und Weise der Veränderung des Gegenkraftwerts hängt von deren Erzeugung ab. Wird die Gegenkraft mittels einer Feder aufgebracht, so läßt sie sich durch mehr oder weniger starkes Spannen der Feder, insbesondere stufenlos, leicht und rasch verändern. Auch diese Einrichtung zur Veränderung der Gegenkraft kann man sehr platzsparend ausbilden. Ergänzend wird an dieser Stelle noch darauf hingewiesen, daß die Querbewegung der bewegbaren Lagers beispielsweise in der Größenordnung von 0,5 bis 1,00 mm liegen kann und sie nicht größer als 2,00 mm zu sein braucht. Dieses quer bewegbare Lager befindet sich in einer entsprechenden Aufnahme des Maschinengehäuses od. dgl., welche aufgrund ihrer Dimensionierung und Ausbildung beide Grenzlagen, also die Ausgangsstellung und die Abschaltstellung für den Motor, sicher festlegt.

In diesem Sinne besteht eine Weiterbildung der Erfindung darin, daß das bewegbare Lager der Getriebewelle in einer Bohrung oder Nut des Maschinengehäuses od. dgl. gelagert ist, wobei in Bewegungsrichtung gemessen deren Durchmesser bzw. Breite die Lagerbreite um den maximalen Bewegungsbetrag, also beispielsweise einen Betrag zwischen 0,5 und 2 mm, übertrifft.

Eine weitere Ausgestaltung der Erfindung sieht vor, daß das bewegbare Lager in Arbeitsstellung an der einen Nutwandung oder einem Teilumfang der Bohrung anliegt und dabei im Falle einer Bohrung die geometrischen Achsen von Getriebe und Bohrung identisch sind und daß der anliegende Teil des Lagers entsprechend dem Bohrungsradius gekrümmt ist, wobei die Federkraft der Belastungsfeder gegen die am Lager anliegende Nutwandung bzw. den entsprechenden Teilumfang der Bohrungswandung gerichtet ist. Das in dieser Bohrung oder Nut befindliche Lager dient somit einerseits einer Nullpunktfestlegung mit einer parallelen Ausrichtung der Getriebewelle gegenüber der Arbeitspindel sowie möglicherweise vorhandenen anderen Wellen und andererseits zur Begrenzung der Querbewegung des Lagers bzw. leichten Schrägstellung der Getriebewelle. Die Nullpunktfestlegung ist insofern wichtig, als sie in besonders einfacher aber auch präziser Weise das Einstellen unterschiedlicher Drehmomentwerte ermöglicht.

Die Belastungsfeder kann gemäß zweier bevorzugter Ausführungsformen der Erfindung nach den Ansprüchen 14 und 19 entweder als Tellerfederpaket oder als Torsionsstab ausgebildet sein. Im ersteren Falle erreicht man das Spannen durch eine zumindest annähernd geradlinige Bewegung, während im zweiteren Falle eine Drehbewegung erforderlich ist. Dementsprechend sind dann die Mechanismen zur Erhöhung oder Verminderung der Federspannung zu gestalten.

Weitere vorteilhafte Ausbildungen und Vorteile der erfindungsgemäßen Maschine ergeben sich aus der nachfolgenden Zeichnungsbeschreibung.

Die Zeichnung zeigt zwei Ausführungsbeispiele der Erfindung. Hierbei stellen dar :

Fig. 1 eine Draufsicht auf die vorzugsweise als elektrisches Handwerkzeug ausgebildete motorgetriebene Maschine einer ersten Ausführungsform, teilweise in horizontaler Richtung geschnitten,

Fig. 2 einen Schnitt gemäß der Linie II-II der Fig. 1,

Fig. 3 einen Schnitt gemäß der Linie III-III der Fig. 2,

Fig 4 eine Vorderansicht der Fig. 1 in Pfeilrichtung A,

Fig. 5 einen Schnitt gemäß der Linie V-V der Fig. 4,

Fig. 6 eine der Fig. 1 entsprechende Darstellung der zweiten Ausführungsform in einem durch die Arbeitsspindel und eine Vorgelegewelle gelegten Schnitt,

Fig. 7 einen Schnitt gemäß der Linie VII-VII der Fig. 6,

Fig. 8 einen Teil-Schnitt gemäß der Linie VIII-VIII der Fig. 6.

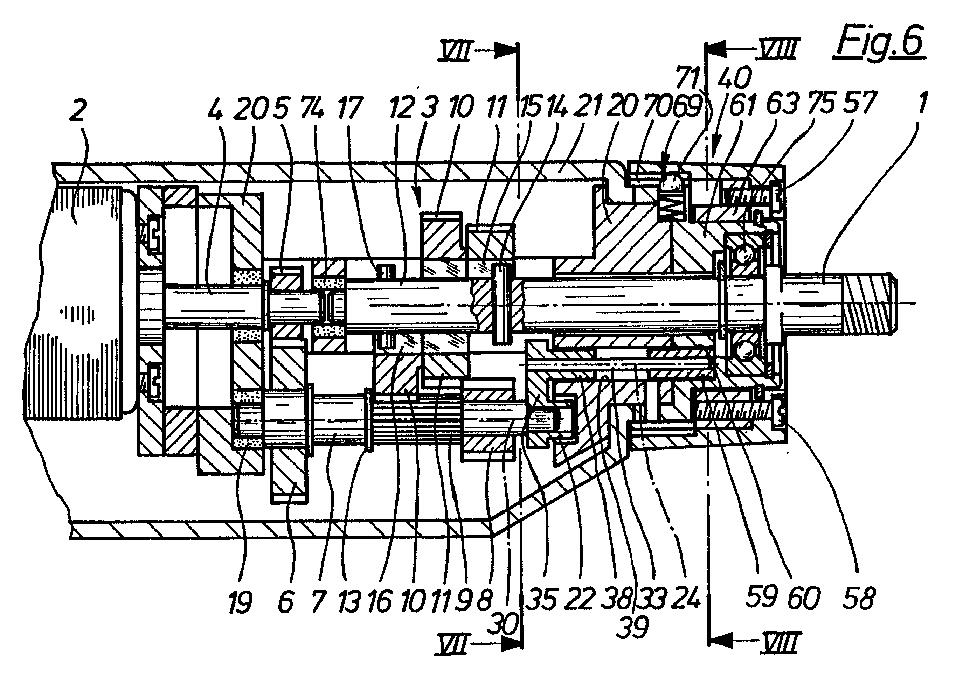

Bei den Ausführungsbeispielen handelt es sich um ein elektrisches Handwerkzeug, vorzugsweise einen elektrischen Schrauber oder Handschleifer, mit dessen Arbeitsspindel 1 ein Werkzeug, also beispielsweise eine Schrauberklinge bzw. ein Schleifer, drehfest verbunden wird. Die Arbeitsspindel 1 wird von einem Antriebsmotor, im bevorzugten Falle also von einem Elektromotor 2, unter Zwischenschaltung eines Getriebes 3 angetrieben. Wesentliche Elemente des letzteren sind ein mit der Motorwelle 4 verbundenes Ritzel 5, das mit einem Zahnrad 6 einer Getriebewelle 7 kämmt. Bei der Getriebewelle handelt es sich um eine Vorgelegewelle, welche außer dem Zahnrad 6 noch ein Ritzel 8 trägt. Das zwischen beiden gelegene Wellenstück ist zumindest an seinem, dem Ritzel 8 zugekehrten Teilstück, als weiteres Ritzel 9 ausgebildet. Mit dessen Zähnen ist ein Schiebe-Zahnrad 10 in ständigem Eingriff. Es ist wie ein zweites Schiebe-Zahnrad 11 auf einer Getriebe-Abtriebswelle 12 dreh- und schiebbar gelagert. Letztere ist einstückig mit der Arbeitsspindel 1 hergestellt. Das zweite Schiebe-Zahnrad 11 steht in jeder Schiebestellung mit dem Ritzel 8 der Getriebewelle 7 in Eingriff. Zur Begrenzung der Verschiebebewegung der Schiebe-Zahnräder 10, 11 nach links (Fig. 6) trägt die Getriebewelle 7 noch einen Anschlagring oder -bund 13. Beim Ausführungsbeispiel handelt es sich um einen Sprengring. Man erkennt insbesondere aus dieser Figur, daß in der linken Schiebeendstellung das zweite Schiebe-Zahnrad 11 mit seinem rechten Randbereich noch in den linken Randbereich des Ritzels 8 eingreift, also der formschlüssige Kontakt zwischen den Zahnrädern 8 und 11 noch besteht. In der oberen Bildhälfte der Fig. 6 befinden sich die beiden Schiebe-Zahnräder 10 und 11 in ihrer rechten Verschiebeendlage. In dieser ist das zweite Schiebe-Zahnrad 11 über einen die Getriebe-Abtriebswelle 12 radial durchsetzenden Querstift 14 formschlüssig mit der Arbeitsspindel gekuppelt. Der Querstift 14 greift in eine Aufnahme 15 des zweiten Schiebe-Zahnrads 11 ein. Es handelt sich dabei um zwei um 180° versetzte Längsnuten des Zahnrads 11. Denkbar ist aber auch eine kreuz- oder sternförmige Aufnahme, welche dann zwei oder mehrere winkelversetzte Kupplungsmöglichkeiten bietet. Dementsprechend befindet sich am Schiebe-Zahnrad 10 eine zweite Aufnahme 16 zum Eingriff eines zweiten Querstifts 17. Mit letzterem ist das zweite Schiebe-Zahnrad 10 in seiner linken Schiebeendstellung gekuppelt. Die beiden Schiebe-Zahnräder 10 und 11 werden in bekannter Weise auf Getriebe-Abtriebswelle 12 bzw. der Arbeitsspindel 1 verschoben. Ihre Gesamtbreite ist etwas geringer als der lichte Abstand der beiden Querstifte 14 und 17, so daß sie von der Arbeitsspindel 1 vollständig abgekuppelt werden können. Diese Mittelstellung der beiden Zahnräder ergibt den Leerlauf der Maschine.

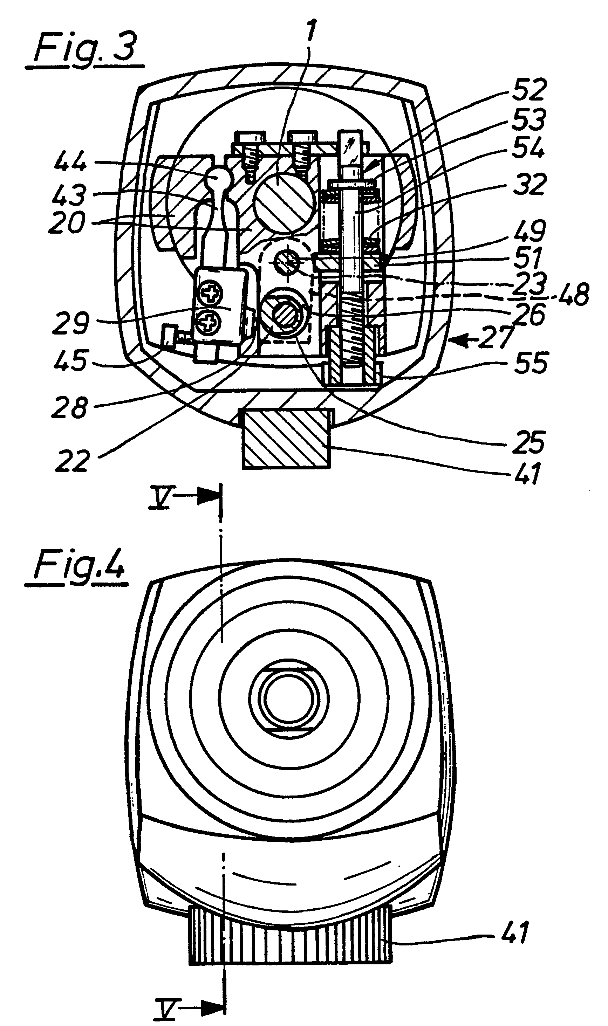

Das in Fig. 6 linke Lager 19 der Getriebewelle 7 ist fest im Maschinengehäuse 20 gehalten, wobei letzteres wie die Zeichnung zeigt, kein geschlossenes Gehäuse ist, weil es sich in einem äußeren Gehäuse 21 befindet, welches seinerseits die innen befindlichen Elemente durch seine, zumindest weitgehend geschlossene Bauweise schützt. Das rechte Lager 22 der Getriebewelle 7 ist im Gegensatz zum Lager 19 und in erfindungsgemäßer Weise quer zur Längsachse 30 der Getriebewelle 7 um einen vorgegebenen relativ geringen Betrag in der Größenordnung von 1 mm bewegbar. Die Beweglichkeit verläuft etwa senkrecht zur Bildebene der Fig. 6 bzw. bogenförmig um die geometrische Achse 23 (Fig. 3) bzw. 24 (Fig. 6).

Die Außenkontur des Lagers 22 kann man gemäß Fig. 3 bei diesem Ausführungsbeispiel als annähernd oval beschreiben. Es greift in eine Bohrung 25 (Fig. 3) des inneren Maschinengehäuses 20 od. dgl. ein. Der in Fig. 3 linke Bereich des bewegbaren Lagers 22 besitzt eine Krümmung, die zumindest in etwa derjenigen der Bohrung 25 entspricht. Der in dieser Figur rechte Lagerbereich hat vom rechten Bereich der Bohrung 25 einen Abstand 26, welcher die maximale Verschiebebewegung des Lagers von der gezeigten linken Ausgangs- oder Nullstellung in die ausgelenkte rechte Abschaltstellung festlegt. Das Lager wird in der nachstehend noch näher beschriebenen Weise mittels einer im Sinne des Pfeils 27 wirkenden Gegenkraft in seiner aus Fig. 3 ersichtlichen (linken) Ausgangsstellung gehalten.

Im Bewegungsbereich des bewegbaren Lagers 22, genauer gesagt in dessen Bewegungsbereich von der rechten Abschaltstellung in die linke Ausgangsstellung, befindet sich gemäß der Erfindung ein Schaltelement 28 für den Antriebsmotor 2. Beim Ausführungsbeispiel handelt es sich beim Schaltelement 28 um den Stößel eines elektrischen Schalters 29, der im Stromkreis der Elektromotors 2 liegt. In der Ausgangsstellung des bewegbaren Lagers 22, also bei normalem Betrieb, bei welchem die geometrische Achse der Getriebewelle 7 parallel zu derjenigen 31 der Arbeitsspindel 1 verläuft, ist der Stößel des Schalters 29 vom bewegbaren Lager niedergedrückt. Da der Schalter Arbeitskontakte aufweist, sind letztere in der Ausgangsstellung des bewegbaren Lagers geschlossen. Wenn aufgrund eines den eingestellten Drehmomentwert übersteigenden Drehmoments an der Arbeitsspindel 1 das bewegbare Lager 25 gegen den Widerstand der Gegenkraft 27 seitlich ausweicht, so wird der Stößel des Schalters 29 freigegeben. Dies führt zu einem Öffnen der Kontakte des Schalters und damit vorzugsweise indirekt zur Stromunterbrechung des Elektromotors 2. Außerdem kann man dadurch auch das sofortige Wiedereinschalten des Motors nach Wegfall des überhöhten Drehmoments verhindern. Demnach entspricht also die verschobene Stellung des bewegbaren Lagers 22 der Abschaltstellung des Elektromotors 2.

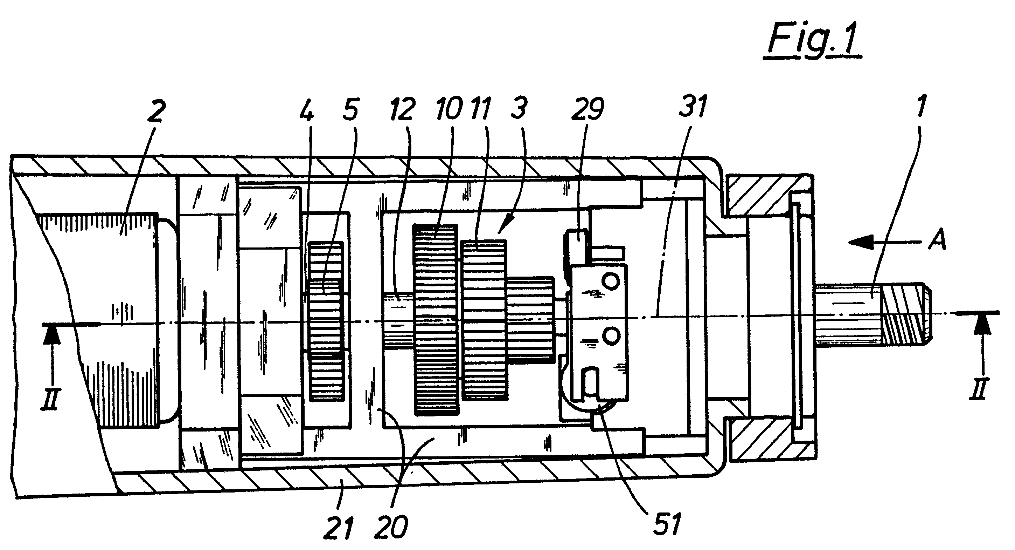

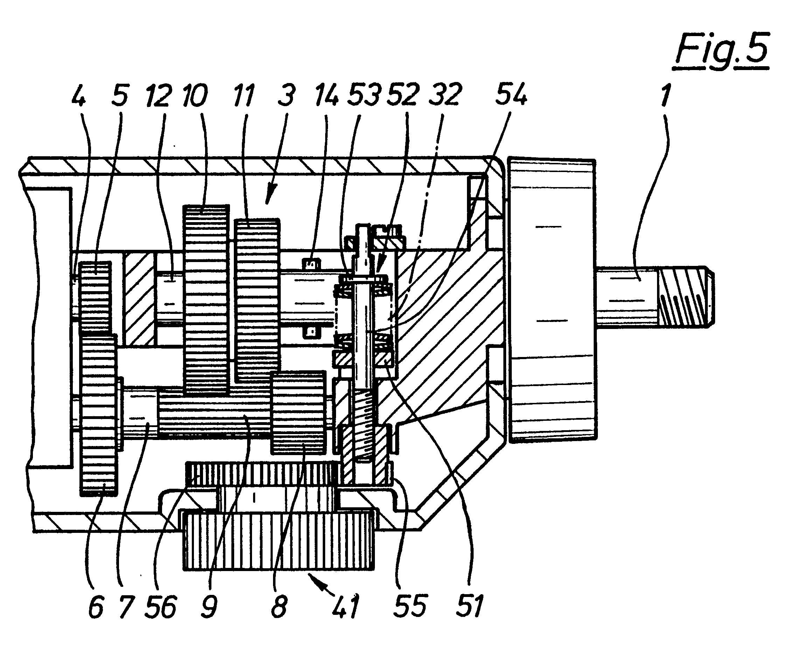

Vorzugsweise handelt es sich um eine Maschine mit variabler Drehmomenteinstellung, d. h. die Stärke der Gegenkraft 27 ist einstellbar. Die Gegenkraft wird mittels wenigstens einer Belastungsfeder erzeugt. Im Falle des ersten Ausführungsbeispiels (Fign. 1 bis 5) besteht die Belastungsfeder aus einem Tellerfederpaket 32. Das zweite Ausführungsbeispiel (Fign. 6 bis 8) sieht demgegenüber eine als federelastischer Torsionsstab 33 ausgebildete Belastungsfeder (Fig. 6) vor. Dessen geometrische Achse 24 ist die bereits erwähnte Schwenkachse für das bewegbare Lager 22.

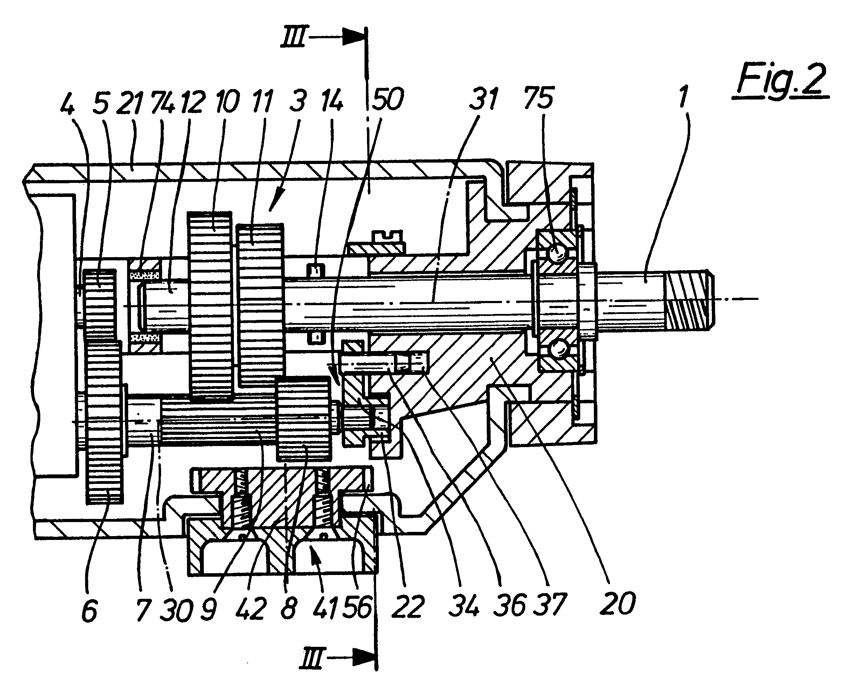

Das bewegbare Lager 22 ist an einem dreh- oder schwenkbaren Lagerhebel 34 (Fig. 2) bzw. 35 (Fig. 6) gehalten. Im ersteren Falle wird die Dreh- bzw. Schwenkachse durch einen Bolzen 36 gebildet, der in einer Bohrung 37 des Gehäuses 20 steckt. Seine geometrische Achse entspricht der vorerwähnten geometrischen Achse 23. Die Dreh- bzw. Schwenkachse des Lagerhebels 35 ist hülsenförmig. Die Hülse 38 ist einstückig mit dem plättchenförmigen Lagerhebel 35 gefertigt und in einer Bohrung 39 des Maschinengehäuses 20 eingeschoben. Ihr Inneres nimmt das eine, in Fig. 6 linke Ende des federelastischen Torsionsstabs 33 drehfest auf. Der Querschnitt des letzteren und damit auch die beiden Aufnahmebohrungen für seine beiden Enden sind vorteilhafterweise viereckig, insbesondere quadratisch. Am Lagerhebel greift die Gegenkraft 27 der Belastungsfeder 32 bzw. 33 an und dreht ihn in die Ausgangslage.

Das Einstellglied 41 des ersten Ausführungsbeispiels (Fign. 1 bis 5) ist als von außen zugängliches Einstellrad ausgebildet. Demgegenüber hat das Einstellglied 40 der zweiten Variante (Fig. 6 bis 8) die Gestalt einer Einstellhülse, deren geometrische Achse mit derjenigen 31 der Arbeitsspindel 1 zusammenfällt. Die geometrische Achse 42 des Einstellglieds 41 verläuft gemäß Fig. 2 senkrecht zur geometrischen Achse 31. Das Einstellglied 41 befindet sich vorzugsweise an der Unterseite des Handgeräts.

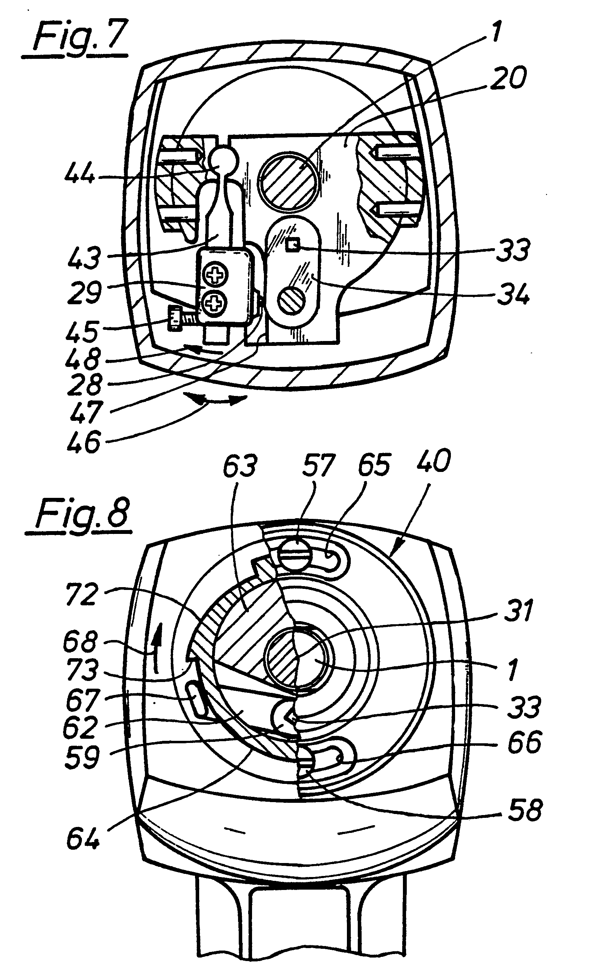

Das Schaltelement 28 ist gegenüber dem Maschinengehäuse 20 od. dgl. einstellbar. Bei beiden Ausführungsbeispielen erfolgt die Einstellung indirekt über eine Verlagerung des elektrischen Schalters 29. Letzterer ist an einem federelastisch biegbaren Halteglied 43 befestigt, welches vorzugsweise aus Kunststoff gefertigt ist. Um die Elastizität zu erhöhen, ist der Querschnitt des Halteglieds im Bereich der Einspann- oder Befestigungsstelle für die im Querschnitt etwa kreisförmige Halteleiste 44 reduziert. Ein Stellglied 45 ermöglicht ein Auslenken des Halteglieds 43 im Sinne des Doppelpfeils 46 (Fig. 7). Das Stellglied 45 ist als Stellschraube ausgebildet. Ihr Gewinde greift in ein Muttergewinde des Halteglieds 43 ein. Es durchsetzt dieses Halteglied und sein freies Ende stützt sich an einer Fläche 47 (Fig. 7) des Maschinengehäuses 20 ab. Infolgedessen führt ein Eindrehen der Schraube in das Gewinde des Halteglieds 43 beispielsweise zu dessen Verschwenkung im Sinne des Pfeils 48. Dadurch entfernt sich das Schaltelement 28, also der Stößel des Schalters 29, von der zugeordneten Fläche oder Kante des Lagerhebels 34, was gleichzeitig auch eine entsprechende Entfernung vom in Ausgangsstellung befindlichen bewegbaren Lager 22 bedeutet. Umgekehrt erfolgt eine Annäherung des Schaltelements 28 an den Lagerhebel 34 bzw. das bewegbare Lager 20 bei einem Herausschrauben des Stellglieds 45 in Gegenrichtung. Wenn es sich, wie bei den Ausführungsbeispielen vorgesehen, beim Schaltelement 28 um den Stößel eines elektrischen Schalters 29 handelt, so findet nach dem Anliegen des Betätigungselements am Lagerhebel 34 statt einer weiteren Annäherung des Schaltelements eine Zustellung des elektrischen Schalters statt. Dies hat eine teilweise Betätigung oder auch Umschaltung des Schaltmechanismus zur Folge. Auf jeden Fall kann man über das Stellglied 45 den Schaltzeitpunkt unabhängig von der jeweils gewählten Schalteinrichtung einstellen. Anstelle eines Schalters kann durchaus auch ein Piezogeber, ein Hall-Sensor oder ein Sensorelement eines induktiven oder kapazitiven Wegsensors verwendet werden. Bei beiden Ausführungsbeispielen ist vorgesehen, daß der elektrische Schalter derart an den Lagerhebel 34 angenähert wird, daß bei der aus Fig. 3 ersichtlichen Relativlage des bewegbaren Lagers 22 zur Bohrung 25 der Mechanismus des elektrischen Schalters 29 umgeschaltet und dadurch aufgrund der Verwendung von Arbeitskontakten der Stromkreis dieses Schalters geschlossen ist.

Gemäß beispielsweise Fig. 3 erstreckt sich die Achse des Tellerfederpakets 32 quer, insbesondere senkrecht zur Bewegungsrichtung des bewegbaren Lagers 22. Aus diesem Grunde befindet sich letzteres an dem einen Schenkel 48 des um den Bolzen 49 verschwenkbaren Winkelhebels 50. Dieser eine Schenkel 48 ist identisch mit dem bereits erwähnten Lagerhebel 34. Der andere Winkelschenkel 51 des Winkelhebels 50 hat eine ringförmige Gestalt. An ihm liegt das Tellerfederpaket 32 mit seinem in Fig. 3 unteren Ende an. Das hebelferne Ende des Tellerfederpakets liegt an einem einstellbaren Druckglied 52 an.

Das Druckglied 52 besteht aus einem Stützteller 53 und einem das Tellerfederpaket 32 durchsetzenden Dorn 54. Dessen freies Ende ist indirekt mit dem Einstellglied 41 in Antriebsverbindung. Der Dorn 54 hat ein Bolzengewinde, welches in ein Muttergewinde eines drehbar gelagerten, aber axial unverschiebbaren Drehelements 55 eingreift. Weil das vom Drehelement 55 abgewandte Ende des Dorns 54 drehfest gehalten ist, führt ein Drehen des Drehelements 55 in der einen Drehrichtung zu einem Spannen und ein Drehen in Gegenrichtung zu einer Entspannung des Tellerfederpakets. Dadurch kann man das Anpressen des bewegbaren Lagers 25 an den in Fig. 3 linken Bereich der Bohrung 26 innerhalb gewisser Grenzen einstellen. Bei stark gespanntem Tellerfederpaket erreicht man eine große Gegenkraft 27 und damit ein Abschalten des elektrischen Motors bei einem vergleichsweise hohen Drehmoment. Das Drehelement 55 ist außen verzahnt, also in der Art eines Ritzels ausgebildet, und seine Zähne greifen in diejenigen eines Zahnrads 56 des Einstellrads 41 ein, wobei dieses Zahnrad separat oder einstückig mit dem Einstellglied 41 hergestellt werden kann. Das Einstellrad 41 kann in vorteilhafter Weise über eine Rastvorrichtung mit dem Gehäuse verbunden sein, so daß eine stufenweise, durch Rasten gesicherte Einstellung des Drehmomentwertes möglich ist. Dies kann mit einer Marke am Einstellrad und einer Skala am Gehäuse kombiniert werden. Auch bei stufenloser Einstellung ist eine derartige Skala sinnvoll.

Die Belastungsfeder des zweiten Ausführungsbeispiels (Fign. 6 bis 8) ist wie gesagt als federelastischer Torsionsstab 33 ausgebildet. Sein eines, in Fig. 6 linkes Ende steckt verdrehfest in einem hülsenförmigen Ansatz 38 des Lagerhebels 35. Sein anderes Ende ist drehfest in einem hülsenförmigen Verstellglied 59 gehalten. Dieses ist drehbar in einer Bohrung 60 eines mit dem Gehäuse 20 verbundenen Lagerrings 61 gelagert. Letzterer trägt eine drehbare Exzenterscheibe 63, an deren Außenumfang sich ein Einstellexzenter 64 (Fig. 8) befindet. Sie ist über Schrauben 57 und 58 mit dem Einstellglied 40 verbunden, so daß über letzteres der Einstellexzenter 64 gedreht werden kann. Die Schrauben 57 und 58 durchsetzen bogenförmige Langlöcher 65 bzw. 66, welche eine Justierung des Einstellglieds 40 gegenüber der Exzenterscheibe 63 ermöglichen.

An seinem inneren Ende trägt das hülsenförmige Verstellglied 59 einen radial abstehenden Auslegerarm 62 (Fig. 8). Sein abgewinkeltes freies Ende 67 liegt außen auf dem Einstellexzenter 64 auf. Die Zuordnung der verschiedenen vorstehend erläuterten Teile ist so getroffen, daß der Torsionsstab in jeder Zuordnung des freien Endes 67 des Auslegerarms 62 zum Einstellexzenter 64 gespannt ist. Dies hängt auch mit der gewählten Exzentrizität, d. h. dem radialen Abstand des Exzenteranfangs und Exzenterendes von der geometrischen Achse 31 der Arbeitsspindel 1 ab.

Aus dem Vorstehenden ergibt sich, daß eine Drehung des Einstellexzenters 64 in Pfeilrichtung 68 aufgrund der zunehmenden Exzentrizität zu einem Verschwenken des Auslegerarms 62 in Gegenrichtung führt und dadurch der Torsionsstab 33 immer stärker verdrillt wird. Dies erhöht die Anpresskraft des bewegbaren Lagers an den linken Bereich der Bohrung 25 (Fig. 3), wobei bezüglich dieser Bohrung und der Lagerform beide Ausführungsbeispiele gleich sind.

Um den eingestellten Wert des Drehmoments bzw. die Spannung des Torsionsstabs 33 zu sichern, ist zwischen das Maschinengehäuse 20 od. dgl. und das Einstellglied 40 eine Verrasteinrichtung 69 mit mehreren in Drehrichtung versetzten Verraststellungen geschaltet. Sie besteht aus mehreren, am Innenumfang des Einstellglieds 40 angebrachten, in Ausrichtung verlaufenden, insbesondere gleichen gegenseitigen Umfangsabstand aufweisenden Verrastnuten 70 für ein Verrastglied 71, wobei es sich vorzugsweise um eine federbelastete Kugel handelt wie man sie bei Schneppern kennt.

Dem Einstellexzenter 64 ist, wie man insbesondere Fig. 8 entnehmen kann, in Drehrichtung gesehen ein Montageexzenter 72 vorgelagert. Er besitzt vorzugsweise eine geringere Bogenlänge und dafür eine stärkere Steigung. Insbesondere liegt sein inneres Ende näher an der geometrischen Achse 31 als das innere Ende des Einstellexzenters 64. Weil letzterer so ausgelegt ist, daß der Torsionsstab in jeder Zuordnung des abgewinkelten Endes 67 zum Einstellexzenter 64 gespannt ist, wäre die Montage ohne den Montageexzenter 72 etwas aufwendig. Wenn man hingegen beim Aufstecken der Exzenterscheibe 63 auf den Lagerring 61 dem abgewinkelten Ende 67 des Auslegerarms 62 das innere Ende des Montageexzenters 72 zuordnet, so ist dies problemlos möglich, weil dabei ein Spannen des Torsionsstabs 33 nicht erforderlich ist. Nach dem Aufstecken dreht man die Exzenterscheibe 63 in Pfeilrichtung 68. Sobald der Montageexzenter 72 vollständig am freien Ende 67 des Auslegerarms 62 vorbeibewegt ist, erreicht man bei gleichzeitig geringem Spannen des Torsionsstab 33 die für den Betrieb erforderliche Zuordnung des abgewinkelten Endes 67 und des Einstellexzenters 64. Der stufenförmige Übergang 73 vom Montageexzenter 72 zum Einstellexzenter 64 bildet zugleich einen der beiden Drehanschläge. Der nicht gezeigte andere Drehanschlag ist in ähnlicher Weise gestaltet.

Aufgrund der gewählten Breite der Schiebe-Zahnräder 10 und 11 und des Seitenabstands der beiden Querstifte 14 und 17 ist die Leerlaufstellung des Getriebes bereits nach einer Verschiebung des Zahnrads 11 um lediglich eine halbe Zahnradbreite erreicht. Auch dies trägt zu einer kurzen Bauweise und zu kleinen Schaltwegen bei. Die Getriebe-Abtriebswelle 12 bzw. Arbeitsspindel 1 ist in den beiden Lagern 74 und 75 gelagert. Die als Vorgelegewelle ausgebildete Getriebewelle 7 kann ebenfalls kurz gehalten werden, was nicht nur allein im Hinblick auf die Auslenkung des bewegbaren Lagers 22 von Vorteil ist. Es entstehen nämlich hierdurch auch vergleichsweise kurze Hebelarme beim Kraftübergang vom Ritzel 9 auf das Schiebe-Zahnrad 10 einerseits und vom Ritzel 8 auf das andere Schiebe-Zahnrad 11 andererseits. Die für die Momentenabschaltung wesentliche Hebelkraft ist direkt von der Stellung der beiden Schiebe-Zahnräder abhängig. In vorteilhafter Weise sind die beiden Schaltpositionen der Schiebe-Zahnräder so gewählt, daß im gesamten Drehmomentenbereich der Maschine das Moment vorgewählt und geschaltet werden kann.

Die aus dem elektrischen Antriebsmotor 2, dem Getriebe 3, einschließlich der Arbeitsspindel 1 bestehende Einheit mit dem "inneren" Maschinengehäuse 20 od. dgl. bildet eine komplette, in das Außengehäuse 21 des Handwerkzeugs einschiebbare Einheit. Von letzterer können die Kräfte auf das Außengehäuse 21 an genau definierter Stelle übertragen werden.

## Ansprüche

1. Motorgetriebene Handwerkzeugmaschine mit variabler Drehmomenteinstellung, mit einem Motor (2), einer Arbeitsspindel (1) und einem zwischen diesen vorgesehenen, mindestens ein zwischengeschaltetes Räderpaar aufweisendes Getriebe, welches ein Maschinengehäuse (20) sowie eine in zwei im Abstand voneinander angeordneten Lagern (19, 22) aufgenommene Getriebewelle (7) umfaßt, wobei die Getriebewelle (7) durch das erste, radial zu ihrer Längsachse gegen eine Gegenkraft verschiebbare Lager (22) von einer Ausgangsstellung in eine ein Sensorelement (29) einer Drehmomentabschaltung betätigende Abschaltstellung bewegbar ist, **dadurch gekennzeichnet, daß** das erste Lager (22) bogenförmig um eine zwischen der Arbeitsspindel (1) und der Getriebewelle (7) liegende geometrische Achse (23, 24) begrenzt bewegbar gelagert ist, daß das zweite Lager (19) radial zur Längsachse der Getriebewelle (7) unbeweglich in dem Maschinengehäuse (20) verankert ist, so daß die Getriebewelle (7) in ihrer Abschaltstellung gegenüber der Ausgangsstellung um das zweite Lager (19) verkippt ist, und daß das Sensorelement (29) ein im Bewegungsbereich des ersten Lagers (22) oder eines mit diesem fest verbundenen Maschinenteils angeordnetes Schaltelement (28) ist, welches bei der Verkippbewegung der Getriebewelle (7) die Motorabschaltung auslöst.

2. Maschine nach Anspruch 1, dadurch gekennzeichnet, daß das erste Lager (22) der Getriebewelle (7) an einem dreh- oder schwenkbaren Lagerhebel (34, 35) angebracht oder gehalten ist, an welchem die Gegenkraft (27) der Belastungsfeder (32, 33) angreift.

3. Maschine nach Anspruch 2, dadurch gekennzeichnet, daß die geometrische Achse (24), um die der Lagerhebel (35) schwenkbar ist, gleich der geometrischen Achse eines federelastischen Torsionsstabes (33) ist.

4. Maschine nach Anspruch 2, dadurch gekennzeichnet, daß die geometrische Achse (23), um die der Lagerhebel (34) schwenkbar ist, gleich der geometrischen Achse (23) eines Bolzens (36) ist.

5. Motorgetriebene Maschine mit variabler Drehmomenteinstellung, mit einem Motor (2), einer Arbeitsspindel (1) und einem zwischen diesen vorgesehenen mindestens ein zwischengeschaltetes Räderpaar aufweisendes Getriebe, welches ein Maschinengehäuse (20) sowie eine in zwei im Abstand voneinander angeordneten Lagern (19, 22) aufgenommene Getriebewelle (7) umfaßt, wobei die Getriebewelle (7) durch das erste, radial zu ihrer Längsachse gegen eine Gegenkraft verschiebbare Lager (22) von einer Ausgangsstellung in eine ein Sensorelement (29) einer Drehmomentabschaltung betätigende Abschaltstellung bewegbar ist, dadurch gekennzeichnet, daß die Getriebewelle (7) eine Vorlegewelle mit mindestens zwei Ritzeln (8, 9) unterschiedlicher Größe ist und die Arbeitsspindel (1) zwei lose drehbare Schiebe-Zahnräder (10, 11) unterschiedlicher Größe trägt, wobei in der einen Schiebeendstellung das eine und in der anderen Schiebeendstellung das andere mit der Arbeitsspindel gekuppelt ist, während sie in einer etwa mittleren Leerlauf-Schiebestellung von der Arbeitsspindel (1) abgekuppelt sind, und daß beide Schiebe-Zahnräder (10, 11) in jeder Schiebestellung mit ihren Ritzeln (8, 9) im Eingriff stehen, daß das zweite Lager (19) radial zur Längsachse der Getriebewelle (7) unbeweglich in dem Maschinengehäuse (20) verankert ist, so daß die Getriebewelle (7) in ihrer Abschaltstellung gegenüber der Ausgangsstellung um das zweite Lager (19) verkippt ist, und daß das Sensorelement (29) ein im Bewegungsbereich des ersten Lagers (22) oder eines mit diesem fest verbundenen Maschinenteils angeordnetes Schaltelement (28) ist, welches bei der Verkippbewegung der Getriebewelle (7) die Motorabschaltung auslöst.

6. Maschine nach Anspruch 5, dadurch gekennzeichnet, daß jedes Schiebe-Zahnrad (10, 11) über mindestens einen Querstift (14, 17) oder dergleichen der Arbeitsspindel (1) und eine zuordenbare Aufnahme (15, 16) des ankuppelbaren Zahnrads (10, 11) in Antriebsverbindung bringbar ist, wobei der Seitenabstand der beiden Querstifte (14, 17) die Gesamtbreite beider Schiebe-Zahnräder (10, 11) nur unwesentlich übertrifft.

7. Maschine nach Anspruch 6, dadurch gekennzeichnet, daß das eine, insbesondere im Durchmesser kleinere SchiebeZahnrad (11) in der Leerlauf-Schiebestellung etwa mit seiner halben Breite mit dem zugeordneten, insbesondere größeren Ritzel (8) in Eingriff ist.

8. Maschine nach einem der voranstehenden Ansprüche, dadurch gekennzeichnet, daß die Stärke der Gegenkraft (27) einstellbar ist.

9. Maschine nach Anspruch 8, dadurch gekennzeichnet, daß die Gegenkraft (27) mittels wenigstens einer Belastungsfeder (32, 33) erzeugbar ist.

10. Maschine nach wenigstens einem der vorhergehenden Ansprüche, dadurch gekennzeichnet, daß das Schaltelement (28) oder ein dieses aufweisender Schalter (29) gegenüber dem Maschinengehäuse (20) oder dergleichen einstellbar ist.

11. Maschine nach Anspruch 10, dadurch gekennzeichnet, daß das Schaltelement (28) an einem federelastisch biegbaren Halteglied (43) befestigt ist, das mittels eines Stellglieds (45) auslenk- und einstellbar (46) ist.

12. Maschine nach Anspruch 11, dadurch gekennzeichnet, daß das Stellglied (45) eine Stellschraube ist, die in einem Gewinde des Halteglieds (43) verschraubbar ist und deren eines Ende sich an einer Gehäusefläche (47) oder dergleichen abstützt.

13. Maschine nach Anspruch 12, dadurch gekennzeichnet, daß das bewegbare Lager (22) in Arbeitsstellung an der einen Nutwandung oder einem Teilumfang der Bohrung (25) anliegt und dabei im Falle einer Bohrung die geometrischen Achsen von Getriebewelle (7) und Bohrung (25) identisch sind, und daß der anliegende Teil des Lagers (22) entsprechend dem Bohrungsradius gekrümmt ist, wobei die Federkraft der Belastungsfeder (32, 33) gegen die am Lager (22) anliegende Nutwandung bzw. den entsprechenden Teilumfang der Bohrungswandung gerichtet ist.

14. Maschine nach wenigstens einem der Ansprüche 3 bis 13, dadurch gekennzeichnet, daß die Belastungsfeder aus einem Tellerfederpaket (32) besteht.

15. Maschine nach Anspruch 14, dadurch gekennzeichnet, daß die Achse des Tellerfederpakets (32) quer, insbesondere senkrecht, zur Bewegungsrichtung des bewegbaren Lagers (22) verläuft und letzteres den einen Winkelschenkel (48) eines im Maschinengehäuse (20) drehbar gelagerten Winkelhebels (50) bildet, an dessen ande rem Winkelschenkel (51) das hebelnahe Ende des Tellerfederpakets anliegt, dessen hebelfernes Ende einem einstellbaren Druckglied (52) zugeordnet ist.

16. Maschine nach Anspruch 15, dadurch gekennzeichnet, daß das Druckglied (52) aus einem Stützteller (53) und einem das Tellerfederpaket durchsetzenden Dorn (54) besteht, dessen freies Ende mit dem Einstellglied (41) verbunden ist, mit dem eine Zugkraft auf den Dorn ausübbar ist.

17. Maschine nach Anspruch 16, dadurch gekennzeichnet, daß der Dorn (54) mit einem Bolzengewinde versehen ist, das in ein Muttergewinde eines drehbar gelagerten, aber axial unverschiebbaren Drehelements (55) eingreift, wobei der Dorn (54) drehfest gehalten, aber in Längsrichtung bewegbar ist.

18. Maschine nach Anspruch 17, dadurch gekennzeichnet, daß das Drehelement (55) als Ritzel ausgebildet ist oder ein solches trägt, das mit einem Zahnrad (56) des Einstellglieds (41) im Eingriff ist.

19. Maschine nach wenigstens einem der Ansprüche 3 bis 13, dadurch gekennzeichnet, daß die Belastungsfeder als Torsionsstab (33) ausgebildet ist.

20. Maschine nach Anspruch 19, dadurch gekennzeichnet, daß das eine bzw erste Ende des Torsionsstabs (33) exzentrisch und drehfest im bewegbaren Lager (22) der Getriebewelle (7) oder einem damit fest verbundenen Bauteil (35) gehalten ist und sein anderes bzw. zweites Ende in einem durch das Einstellglied (40) drehbaren Verstellglied (59) gehalten ist, wobei das Einstellglied (40) zumindest in Stufen dreh-und feststellbar ist.

21. Maschine nach Anspruch 20, dadurch gekennzeichnet, daß das hülsenförmige Verstellglied (59) drehbar im Maschinengehäuse (20) od. dgl. gelagert ist und einen Auslegerarm (62) trägt, dessen freies Ende an einem drehbaren Einstellexzenter (64) des Einstellglieds (40) anliegt.

22. Maschine nach Anspruch 21, dadurch gekennzeichnet, daß das freie Ausfegerarmende (67) abgewinkelt und der Einstellexzenter (64) am Umfang einer drehbaren Exzenterscheibe (83) angebracht ist, wobei das abgewinkelte Ende (87) des Auslegerarms (62) auf dem Einstellexzenter (64) aufliegt.

23. Maschine nach Anspruch 22, dadurch gekennzeichnet, daß die geometrische Achse des ringförmigen Einstellexzenters (84) mit derjenigen des Einstellglieds (40) bzw. der Arbeitsspindel (1) identisch ist und der Torsionsstab (33) in jeder Arbeits-Drehlage des Einstellexzenters gespannt ist.

24. Maschine nach Anspruch 11 und 23, dadurch gekennzeichnet, daß der, insbesondere aus Kunststoff gefertigte, Einstellexzenter (64) vom hülsenförmigen Einstellglied (40) umfaßt und drehfest damit verbunden ist, wobei das Einstellglied (40) dem Außengehäuse (21) vorgelagert ist.

25. Maschine nach wenigstens einem der Ansprüche 22 bis 24, dadurch gekennzeichnet, daß dem Einstellexzenter (64) in Drehrichtung ein Montageexzenter (72), insbesondere unmittelbar vorgelagert ist, dessen der geometrischen Achse (31) nächster Anfansbereich von der geometrischen Achse (31) einen geringeren Abstand aufweist als der Anfangsbereich des Einstellexzenters (64).

26. Maschine nach wenigstens einem der Ansprüche 19 bis 25, dadurch gekennzeichnet, daß sich der Torsionsstab (33) etwa parallel zur Arbeitsspindel (1) erstreckt und die geometrische Achse des Torsionsstabs (33) etwa mittig zwischen den geometrischen Achsen (31 bzw. 30) dar Arbeitsspindel (1) und der Getriebewelle (7) angeordnet ist.

27. Maschine nach wenigstens einem der Ansprüche 24 bis 26, dadurch gekennzeichnet, daß zwischen das Einstellglied (40) und das Maschinengehäuse (20) od. dgl. eine Verrasteinrichtung (69) mit mehreren in Drehrichtung versetzten Verraststellungen geschaltet ist.

28. Maschine nach Anspruch 27, dadurch gekennzeichnet, daß das Einstellglied (40) an seinem Innenumfang mehrere in Achsrichtung verlaufende, insbesondere gleichmäßig am Innenumfang verteilte Verraststufen (70) für ein Verrastglied (71) der Verrasteinrichtung (69) aufweist und das Verrastglied insbesondere aus einer federbelasteten Kugel besteht.

29. Maschine nach wenigstens einem der vorhergehenden Ansprüche, dadurch gekennzeichnet, daß das Schaltelement (28) durch den Stößel eines elektrischen Schalters (29), insbesondere eines Schalters mit Arbeitskontakten, gebildet ist.

## Claims

1. A motor-driven hand tool machine with variable torque adjustment, having a motor (2), a working spindle (1) and a transmission provided between the latter, said transmission having at least one interposed pair of gears and comprising a machine housing (20) and a transmission shaft (7) accommodated in two bearings (19, 22) which are spaced apart, the transmission shaft (7) being movable, from an initial position into a switch-off position which operates a sensor element (29) of a torque switching-off arrangement, by the first bearing (22) which is displaceable radially of the longitudinal axis of the transmission shaft against a counterforce, CHARACTERISED IN that the first bearing (22) is mounted, so as to be movable to a limited extent, in a curve about a geometric axis (23, 24) lying between the working spindle (1) and the transmission shaft (7); that the second bearing (19) is fixed, immovably radially of the longitudinal axis of the transmission shaft (7), in the machine housing (20) in such a way that the transmission shaft (7), in its switch-off position, is tilted about the second bearing (19) in relation to the initial position; and that the sensor element (29) is a switching element (28) disposed within the range of movement of the first bearing (22) or of a machine part firmly connected with the latter, which switching element triggers the motor switching-off arrangement during the tilting movement of the transmission shaft (7).

2. A machine according to Claim 1, characterised in that the first bearing (22) of the transmission shaft (7) is arranged or held on a rotatable or pivotable bearing lever (34, 35) on which the counterforce (27) of the loading spring (32, 33) acts.

3. A machine according to Claim 2, characterised in that the geometric axis (24), about which the bearing lever (35) is pivotable, is equal to the geometric axis of a resiliently sprung torsion rod (33).

4. A machine according to Claim 2, characterised in that the geometric axis (23), about which the bearing lever (34) is pivotable, is the same as the geometric axis (23) of a bolt (36).

5. A motor-driven machine with variable torque adjustment, having a motor (2), a working spindle (1), and a transmission provided between the latter, said transmission having at least one interposed pair of gears and comprising a machine housing (20), and a transmission shaft (7) accommodated in two bearings (19, 22) which are spaced apart, the transmission shaft (7) being movable, from an initial position into a switch-off position which operates a sensor element (29) of a torque switching-off arrangement, by the first bearing (22) which is displaceable radially of the longitudinal axis of the transmission shaft against a counterforce, characterised in that the transmission shaft (7) is a countershaft having at least two pinions (8, 9) of different sizes, and that the working spindle (1) carries two slackly rotatable slidable cogwheels (10, 11) of different sizes, one of which is coupled with the working spindle in one end position of sliding movement and the other is so coupled in the other end position of sliding movement, while in an approximately central idling position of sliding movement they are uncoupled from the working spindle (1); and in that both slidable cogwheels (10, 11) are in engagement through their pinions (8, 9) in each sliding position; in that the second bearing (19) is fixed, immovably radially of the longitudinal axis of the transmission shaft (7), in the machine housing (20) in such a way that the transmission shaft (7), in its switch-off position, is tilted about the second bearing (19) in relation to the initial position ; and in that the sensor element (29) is a switching element (28) disposed within the range of movement of the first bearing (22) or of a machine part firmly connected with the latter, which switching element triggers the motor switching-off arrangement during the tilting movement of the transmission shaft (7).

6. A machine according to Claim 5, characterised in that each slidable cogwheel (10, 11) can be brought into drive connection via at least one cross-pin (14, 17) or the like of the working spindle (1) and via an associated receptacle (15, 16) of the couplable cogwheel (10, 11), the lateral distance between the two cross-pins (14, 17) only slightly exceeding the total width of both slidable cogwheels (10, 11).

7. A machine according to Claim 6, characterised in that about half the width of the slidable cogwheel (11) which is smaller particularly in diameter is in engagement, in the idling position of sliding movement, with the associated, in particular larger, pinion (8).

8. A machine according to any one of the preceding claims, characterised in that the strength of the counterforce (27) is adjustable.

9. A machine according to Claim 8, characterised in that the counterforce (27) can be generated by means of at least one loading spring (32, 33).

10. A machine according to at least one of the preceding claims, characterised in that the switching element (28), or a switch on which it is located, is adjustable in relation to the machine housing (20) or the like.

11. A machine according to Claim 10, characterised in that the switching element (28) is secured on a resiliently sprung flexible holding member (43) which can be deflected and adjusted (46) by means of an adjustment member (45).

12. A machine according to Claim 11, characterised in that the adjustment member (45) is an adjusting screw which can be screwed in a thread of the holding member (43) and one end of the screw is supported on a housing face (47) or the like.

13. A machine according to Claim 12, characterised in that the movable bearing (22), in the working position, rests against either one groove walling or a partial circumference of the bore (25), and during this, in the case of a bore, the geometric axes of the transmission shaft (7) and the bore (25) are identical ; and in that the resting part of the bearing (22) is bent corresponding to the radius of the bore, the resilient force of the loading spring (32, 33) being directed towards the groove walling resting against the bearing (22) or the corresponding partial circumference of the bore walling respectively.

14. A machine according to at least one of Claims 3 to 13, characterised in that the loading spring consists of a set of cup springs (32).

15. A machine according to Claim 14, characterised in that the axis of the set of cup springs (32) runs crosswise, in particular perpendicular, to the movement direction of the movable bearing (22), and the latter forms one angle arm (48) of an angle lever (50) rotatably mounted in the machine housing (20), and the end, near the lever, of the cup spring set rests against the other angle arm (51) of the angle lever (50), and the end, far from the lever, of the cup spring set is associated with an adjustable pressure member (52).

16. A machine according to Claim 15, characterised in that the pressure member (52) consists of a supporting plate (53) and of a mandrel (54) penetrating the cup spring set, the free end of which mandrel is connected to the adjusting member (41) with which tension force can be exerted on the mandrel.

17. A machine according to Claim 16, characterised in that the mandrel (54) is provided with a male thread which engages in a female thread of a rotary element (55) which is rotatably mounted but axially undisplaceable, the mandrel (54) being held so as to be non-rotatable but longitudinally movable.

18. A machine according to Claim 17, characterised in that the rotary element (55) is either formed as a pinion or carries one, which pinion is in engagement with a cogwheel (56) of the adjusting member (41).

19. A machine according to at least one of Claims 3 to 13, characterised in that the loading spring is constructed as a torsion rod (33).

20. A machine according to Claim 19, characterised in that one, i.e. the first, end of the torsion rod (33) is eccentrically and non-rotatably held in the movable bearing (22) of the transmission shaft (7) or in a structural part (35) firmly connected therewith, and its other, i.e. second, end is held in a control member (59) which is rotatable by the adjusting member (40), the adjusting member (40) being rotatable and fixable at least in stages.

21. A machine according to Claim 20, characterised in that the sleeve-shaped control member (59) is rotatably mounted in the machine housing (20) or the like and carries one projecting arm (62) whose free end rests against a rotatable adjusting eccentric (64) of the adjusting member (40).

22. A machine according to Claim 21, characterised in that the free end (67) of the projecting arm is angled and the adjusting eccentric (64) is arranged on the circumference of a rotary eccentric disc (63), the angled end (67) of the projecting arm (62) resting on the adjusting eccentric (64).

23. A machine according to Claim 22, characterised in that the geometric axis of the annular adjusting eccentric (64) is identical to that of the adjusting member (40) or of the working spindle (1), and the torsion rod (33) is tensioned in each working rotary position of the adjusting eccentric.

24. A machine according to Claim 11 and 23, characterised in that the adjusting eccentric (64), made in particular from synthetic material, is encircled by the sleeve-shaped adjusting member (40) and rotatably connected therewith, the adjusting member (40) being mounted in front of the outer housing (21).

25. A machine according to at least one of Claims 22 to 24, characterised in that an assembly eccentric (72) is mounted, in particular directly, in front of the adjusting eccentric (64) in a rotary direction, the initial region, nearest the geometric axis (31), of this assembly eccentric being at a smaller distance from the geometric axis (31) than the initial region of the adjusting eccentric (64).

26. A machine according to at least one of Claims 19 to 25, characterised in that the torsion rod (33) extends more or less parallel to the working spindle (1), and the geometric axis of the torsion rod (33) is arranged more or less centrally between the geometric axes (31 or 30 respectively) of the working spindle (1) and of the transmission shaft (7).

27. A machine according to at least one of Claims 24 to 26, characterised in that a locking device (69), with several locking positions staggered in a rotary direction, is interposed between the adjusting member (40) and the machine housing (20) or the like.

28. A machine according to Claim 27, characterised in that the adjusting member (40) has on its inner circumference several locking stages (70) running in an axial direction and in particular evenly distributed on the inner circumference, these locking stages being for a locking member (71) of the locking device (69) and the locking member consisting in particular of a spring-loaded ball.

29. A machine according to at least one of the preceding claims, characterised in that the switching element (28) is formed by the pushrod of an electric switch (29), in particular of a switch with working contacts.

## Revendications

1. Machine motorisée, telle qu'un outil portatif, avec réglage de couple variable, avec un moteur (2), une broche de travail (1) et une transmission disposée entre eux, pourvue d'au moins une paire intermédiaire de roues, qui comporte un carter-machine (20) ainsi qu'un arbre de transmission (7) monté dans deux paliers (19, 22) espacés l'un de l'autre, l'arbre de transmission (7) étant déplaçable par le premier palier (22), mobile radialement par rapport à son axe longitudinal en opposition à une force antagoniste, depuis une position initiale jusque dans une position d'arrêt produisant l'actionnement d'un élément de détection (29) d'un système d'arrêt d'application de couple, caractérisée en ce que le premier palier (22) est monté de façon à pouvoir effectuer un déplacement limité en forme d'arc autour d'un axe géométrique (23, 24), situé entre la broche de travail (1) et l'arbre de transmission (7), en ce que le second palier (19) est maintenu dans le carter-machine (20) sans pouvoir se déplacer radialement par rapport à l'axe longitudinal de l'arbre de transmission (7), de sorte que l'arbre de transmission (7) en position d'arrêt est décalé par basculement autour du second palier (19) par rapport à la position initiale et en ce que l'élément de détection (29) est un élément de commutation (28) disposé dans la zone de déplacement du premier palier (22), ou d'une partie de machine reliée rigidement avec lui, cet élément de commutation déclenchant l'arrêt du moteur lors du mouvement de basculement de l'arbre de transmission (7).

2. Machine selon la revendication 1, caractérisée en ce que le premier palier (22) de l'arbre de transmission (7) est disposé ou maintenu sur un levier de support (34, 35), pouvant pivoter ou tourner et sur lequel agit la force antagoniste (27) exercée par les ressorts de sollicitation (32, 33).

3. Machine selon la revendication 2, caractérisée en ce que l'axe géométrique (24), autour duquel peut pivoter le levier de support (35), coïncide avec l'axe géométrique d'une barre de torsion (33) ayant l'élasticité d'un ressort.

4. Machine selon la revendication 2, caractérisée en ce que l'axe géométrique (23), autour duquel peut pivoter le levier de support (34), coïncide avec l'axe géométrique (23) d'une cheville (36).

5. Machine motorisée, telle qu'un outil portatif, avec réglage de couple variable, avec un moteur (2), une broche de travail (1) et une transmission disposée entre eux, pourvue d'une paire intermédiaire de roues, qui comporte un carter-machine (20) ainsi qu'un arbre de transmission (7) monté dans deux paliers (19,22° espacés l'un de l'autre, l'arbre de transmission (7) étant déplaçable par le premier palier (22), mobile radialement par rapport à son axe longitudinal en opposition à une force antagoniste, depuis une position initiale jusque dans une position d'arrêt produisant l'actionnement d'un élément de détection (29) d'un système d'arrêt de couple, caractérisée en ce que l'arbre de transmission (7) est un arbre intermédiaire comportant au moins deux pignons (8, 9) de grosseurs différentes et la broche de travail (1) porte deux roues dentées mobiles par translation (10, 11), de grosseurs différentes, montées folles, dont l'une est accouplée avec la broche de travail dans une des positions limites de translation tandis que l'autre est accouplée avec la broche de travail dans l'autre position limite de translation, tandis que, dans une position de marche à vide obtenue par translation, à peu près centrale, elles sont désaccouplées de la broche de travail (1), et en ce que les deux roues dentées (10, 11) mobiles par translation sont en prise, dans chaque position de translation, avec leurs pignons (8,9), en ce que le second palier (19) est maintenu dans le carter-machine (20) sans possibilité de déplacement radial par rapport à l'axe longitudinal de l'arbre de transmission (7) de telle sorte que l'arbre de transmission (7) en position d'arrêt soit décalé par basculement autour du second palier (19) par rapport à la position initiale, et en ce que l'élément de détection (29) est un élément de commutation (28) disposé dans la zone de déplacement du premier palier (22), ou bien d'une partie de machine reliée rigidement avec lui, cet élément de commutation déclenchant l'arrêt du moteur lors du mouvement de basculement de l'arbre de transmission (7).

6. Machine selon la revendication 5, caractérisée en ce que chaque roue dentée (10, 11) mobile par translation peut être amenée en liaison d'entraînement par l'intermédiaire d'au moins une goupille transversale (14, 17), ou analogue, de la broche de travail (1) et par l'intermédiaire d'un évidement associé (15, 16) de la roue dentée (10, 11) pouvant être accouplé, l'espacement latéral des deux goupilles transversales (14, 17) n'étant pas sensiblement supérieure à la largeur totale des deux roues dentées (10, 11).

7. Machine selon la revendication 6, caractérisée en ce qu'une des roues dentées (11) mobiles par translation, notamment celle qui a le diamètre le plus petit, est en prise, dans la position de marche à-vide obtenue par translation, à peu près sur la moitié de sa largeur avec le pignon associé (8), notamment le plus gros.

8. Machine selon l'une des revendications précédentes, caractérisée en ce que la grandeur de la force antagoniste (27) est réglable.

9. Machine selon la revendication 8, caractérisée en ce que la force antagoniste (27) peut être produite à l'aide d'au moins un ressort de sollicitation (32, 33).

10. Machine selon au moins l'une des revendications précédentes, caractérisée en ce que l'élément de commutation (28), ou bien un commutateur (29) le comportant, est réglable par rapport au carter-machine (20) ou analogue.

11. Machine selon la revendication 10, caractérisée en ce que l'élément de commutation (28) est fixé sur un organe de retenue (43), flexible avec l'élasticité d'un ressort et qui peut être écarté et réglé (46) au moyen d'un organe de manoeuvre (45).

12. Machine selon la revendication 11, caractérisée en ce que l'organe de manoeuvre (45) est une vis de manoeuvre, qui peut être vissée dans un filetage de l'organe de retenue (43) et dont une extrémité s'appuie contre une surface (47) du carter ou analogue.

13. Machine selon la revendication 12, caractérisée en ce que le palier mobile (22) s'applique, dans la position de travail, contre une des parois de rainure ou bien contre une partie de périphérie du trou (25), et alors dans le cas d'un trou les axes géométriques de l'arbre de transmission (7) et du trou (25) sont en coïncidence, et en ce que la partie d'application du palier (22) est incurvée en correspondance avec le rayon du trou, la force élastique du ressort de sollicitation (32, 33) étant dirigée vers la paroi de rainure s'appliquant contre le palier (22) ou bien vers la partie correspondante de périphérie du trou s'appliquant contre le palier (22).

14. Machine selon au moins l'une des revendications 3 à 13, caractérisée en ce que le ressort de sollicitation se compose d'un groupe de rondelles Belleville (32).

15. Machine selon la revendication 14, caractérisée en ce que l'axe du groupe de rondelles Belleville (32) est orienté transversalement, notamment perpendiculairement, à la direction de mouvement du palier mobile (22) et ce dernier constitue une des branches (48) d'un levier coudé (50) monté à rotation dans le carter-machine (20) et contre l'autre branche duquel s'applique l'extrémité, proche du levier, du groupe de rondelles Belleville, dont l'extrémité éloignée du levier est associée à un organe de pression réglable (52).

16. Machine selon la revendication 15, caractérisée en ce que l'organe de pression (52) se compose d'une rondelle d'appui (53) et d'un mandrin (54) traversant le groupe de rondelles Belleville et dont l'extrémité libre est reliée à l'organe de réglage (41), à l'aide duquel une force de traction peut être exercée sur le mandrin.

17. Machine selon la revendication 16, caractérisée en ce que le mandrin (54) est pourvu d'un filetage, qui est vissé dans un filetage femelle d'un élément rotatif (55), monté de façon à pouvoir tourner mais non à se déplacer en translation axiale, le mandrin (54) étant monté sans pouvoir tourner mais avec possibilité de translation dans la direction longitudinale.

18. Machine selon la revendication 17, caractérisée en ce que l'élément rotatif (55) est agencé comme un pignon, ou bien porte un pignon, qui est en prise avec une roue dentée (56) de l'organe de réglage (41).

19. Machine selon au moins l'une des revendications 3 à 13, caractérisée en ce que le ressort de sollicitation est agencé comme une barre de torsion (33).

20. Machine selon la revendication 19, caractérisée en ce qu'une, ou bien la première, extrémité de la barre de torsion (33) est maintenue excentriquement, et sans possibilité de rotation relative, dans le palier mobile (22) de l'arbre de transmission (7) ou bien dans un composant (35) relié rigidement à ce palier tandis que son autre, ou sa seconde, extrémité est maintenue dans un organe de manoeuvre (59), pouvant tourner sous l'action de l'organe de réglage (40), cet organe de réglage (40) pouvant tourner et être bloqué au moins par échelons.

21. Machine selon la revendication 20, caractérisée en ce que l'organe de manoeuvre (59) en forme de fourreau est monté de façon tournante dans le carter-machine (20) ou analogue et porte un bras d'actionnement (62), dont l'extrémité libre s'applique contre un excentrique rotatif de réglage (64) de l'organe de réglage (40).

22. Machine selon la revendication 21, caractérisée en ce que l'extrémité libre (67) du bras d'actionnement est recourbée et l'excentrique de réglage (64) est disposé sur la périphérie d'un disque excentrique rotatif (63), l'extrémité recourbée (67) du bras d'actionnement (62) s'appliquant contre l'excentrique de réglage (64).

23. Machine selon la revendication 22, caractérisée en ce que l'axe géométrique de l'excentrique de réglage (64) de forme annulaire coïncide avec l'axe de l'organe de réglage (40) ou bien de la broche de travail (1) et la barre de torsion (33) est en contrainte dans chaque position angulaire de travail de l'excentrique de réglage.

24. Machine selon les revendications 11 et 23, caractérisée en ce que l'excentrique de réglage (64), fabriqué notamment en matière plastique, est entouré par l'organe de réglage (40) en forme de fourreau, et est ainsi relié de façon non tournante avec lui, l'organe de réglage (40) étant disposé en avant du carter extérieur (21).

25. Machine selon au moins l'une des revendications 22 à 24, caractérisée en ce qu'il est prévu, en considérant le sens de rotation, notamment directement en avant de l'excentrique de réglage (64), un excentrique de montage (72) dont la partie initiale, la plus rapprochée de l'axe géométrique (31), est espacée de l'axe géométrique (31) d'une plus petite distance que la partie initiale de l'excentrique de réglage (64).

26. Machine selon au moins l'une des revendications 19 à 25, caractérisée en ce que la barre de torsion (33) est orientée à peu près parallèlement à la broche de travail (1) et l'axe géométrique de la barre de torsion (33) est disposé à peu près au milieu entre les axes géométriques (31, 30) de la broche de travail (31) et de l'arbre de transmission (7).

27. Machine selon au moins l'une des revendications 24 à 26, caractérisé en ce qu'il est prévu, entre l'organe de réglage (40) et le carter-machine (20), ou analogue, un dispositif de verrouillage (69) comportant plusieurs positions de verrouillage, décalées dans le sens de rotation.

28. Machine selon la revendication 27, caractérisée en ce que l'organe de réglage (40) comporte, sur sa périphérie intérieure, plusieurs gradins de verrouillage (70), orientés dans la direction axiale, répartis notamment uniformément sur la périphérie intérieure, pour un organe de verrouillage (71) du dispositif de verrouillage (69) et l'organe de verrouillage se compose notamment d'une bille sollicitée par ressort.

29. Machine selon au moins l'une des revendications précédentes, caractérisée en ce que l'élément de commutation (28) est constitué par le poussoir d'un commutateur électrique (29), notamment un commutateur avec contacts de travail.

*Fig.1*

EP 0 239 670 B1

Fig.2

Fig. 3

Fig. 4

Fig.5

_Fig.6_

EP 0 239 670 B1

_Fig.7_

_Fig.8_